# EUROPEAN PATENT SPECIFICATION

(11) **EP 1 454 824 B1**
(45) Date of publication and mention of the grant of the patent: **23.05.2007**
(21) Application number: 04251308.5
(22) Date of filing: 05.03.2004
(51) Int. Cl.: B63B 29/02

(54) **A method and a cabin deck arrangement in a large passenger vessel**
Verfahren und Kabinendeckanordnung in einem grossen Passagierschiff
Méthode et arrangement de ponts de cabines dans un paquebot de grande taille

(30) Priority: 07.03.2003 FI 20030352
(43) Date of publication of application: 08.09.2004
(73) Proprietor: Aker Yards Oy, 20240 Turku (FI)
(72) Inventor: Westerlund, Dan, 01120 Västerskog (FI); Ylinen, Esa, 00630 Helsinki (FI)
(74) Representative: Hanson, William Bennett

(56) References cited:
- GB-A- 2 110 603
- US-A- 4 779 552
- PATENT ABSTRACTS OF JAPAN vol. 016, no. 576 (M-1345), 16 December 1992 (1992-12-16) & JP 04 224497 A (MITSUBISHI HEAVY IND LTD), 13 August 1992 (1992-08-13)
- PATENT ABSTRACTS OF JAPAN vol. 012, no. 031 (M-663), 29 January 1988 (1988-01-29) & JP 62 184990 A (MITSUBISHI HEAVY IND LTD), 13 August 1987 (1987-08-13)

## Description

The invention relates to a method of arranging cabin decks in a large passenger vessel in accordance with the preamble of claim 1, and a cabin deck arrangement in accordance with the preamble of claim 6 applying the method in practice. A method of arranging cabin decks in a ship in accordance with the preamble of claim 1 and a cabin deck arrangement in accordance with the preamble of claim 6 are disclosed in US-A-4,779,552.

In the passenger cruising business it has been found that large vessels accommodating high passenger volumes also have the highest financial performance. One practical aspect in the business of large passenger cruisers is the possibility to utilize the Panama Canal. Once a passenger vessel meets the conditions of the Panama Canal, its cruising area expands considerably. A so-called Panamax cruiser is a cruiser, the overall dimensions of which are restricted by the maximum length and width for a vessel allowed to steer in the Panama Canal. As for the height of the vessel, this is restricted by technical factors related to shipbuilding. If the height of the vessel is increased for instance by adding decks, the weight of the vessel will increase and the level of the centre of gravity rise and accordingly, the stability of the vessel will be impaired, whereby the vessel does not comply with the so-called SOLAS regulations. The weight and the level of the centre of gravity are thus a crucial issue for a Panamax cruiser. Another factor weakening the stability of a vessel is the wind area on the ship's side, which will expand along with the increasing height of the vessel.

Generally, the aim is to minimize the deck height, as this is an efficient way to lower the centre of gravity. The deck height is, however, dependent on the free height required on the deck, which is dictated by both the movement of people and various architectural aspects, as well as on the space required by the systems serving the ship and the space onboard, especially in the longitudinal direction of the vessel. Also the steel structure requires a space of its own. Particularly, the transverse bulkheads supporting the structures, i.e. the beams, in the dimension of which the excitation frequencies of the propeller need to be considered, and the lead-throughs of the systems in the longitudinal direction of the vessel, such as pipes, ducts and cables, require vertical space.

Once the deck spacing has been defined considering, among other things, the above-mentioned aspects, the centre of gravity can be affected by using light structures, for instance honeycomb boards, in the outfitting of the vessel, by using aluminium instead of steel in the hull structure or by adding ballast into the vessel's lower part.

Extensive use of aluminium and light outfitting materials increases the costs essentially, and therefore the aim has been to limit their use only to the area, which is efficient in view of the centre of gravity, i.e. to the upper structures of the vessel. The use of kentledge as close to the bottom as possible lowers the centre of gravity of the vessel, but at the same time it increases the weight and displacement of the vessel, and thereby the size of the transport machinery of the vessel will increase as well, and more power will be required. Often the kentledge needs to be added as steel to the hull of the vessel, as no free tank capacity is available, and thereby the construction costs will also increase.

A purpose of the present invention is to provide a novel method of arranging cabin decks in large passenger vessels, which method makes it possible to increase the amount of cabin decks in a simple and cost-effective manner, and which method may preferably be applied to Panamax cruisers as well. "Large passenger vessels" refers herein to vessels, whose length preferably exceeds 100 meters.

The purpose of the invention is achieved by a method of arranging decks according to claim 1 and a cabin deck arrangement according to claim 5. Preferred or optional features of the invention are defined in the dependent claims. According to the invention the cabin units are arranged on both sides of the longitudinal space side by side in the longitudinal direction of the vessel according to the pitch of the decks' transverse beams so that the lower parts of the walls of the cabin unit, being parallel to the transverse beams, are attached to the deck in conjunction with said transverse beams and the upper parts of the walls of the cabin unit are arranged between said transverse beams and are provided with a recess or a similar space for a flange part of the transverse beams. In addition said systems in the technical space are connected to the cabin units between said transverse beams by piping, ducts or cables, which are at least substantially transverse with respect to the vessel.

For instance, in a Panamax cruiser there are typically 4 - 6 cabin decks normally situated in the upper structure of the ship. By means of the invention the height of each cabin deck can be essentially lowered and thus the amount of cabin decks can be increased. In this way, a couple of extra decks can typically be provided on the vessel. By means of the arrangement the centre of gravity of the vessel can be lowered, and the weight of each deck decreased, as the steel structure becomes lighter, whereby the material costs can be reduced.

The invention may contribute in three ways to the decrease of the height of the deck spacing: by lowering the height of the transverse beam, by moving the wirings of the systems in the longitudinal direction of the vessel away from the corridor of the cabin unit and the cabin area, and by enabling the installation of a high cabin unit into a lowered space between the decks. The height of the transverse beam is determined by the stiffness of the beam, which affects the resonance frequency of the beam, and by the load of the beam. Without any exception the stiffness of the beam is a dimensioning factor and it is dictated mainly by the height of the beam. In the arrangement the prefabricated stiff module cabin to be mounted on the deck, the walls of which are to be located on top of the beam, and the securing thereof to the deck, will increase the stiffness of the beam substantially and make it possible to lower the beam and thereby also the cabin deck essentially, as the transverse beam can be dimensioned on the basis of the load.

In order to make the low transverse beam of the cabin deck determine the free height of the cabin deck, almost all longitudinal traffic related to the ducts and pipes of the systems has been moved away from the cabin corridor and from above the cabin unit to the technical space amidships. Said technical space is located adjacent to almost every cabin unit and the technical systems required by the cabin unit will extend from the technical space across the cabin corridor over to the cabin unit. The longitudinal traffic on the cabin deck can be arranged only to a minor extent through the transverse beams, as the beam is dimensioned on the basis of the load and that calls for an almost solid structure for the stem of the beam, in contrast to a high beam.

In practice the cabin unit is dimensioned so that its inner height is larger than the distance between the cabin deck supporting it and the flange part of the transverse beam. For architectural reasons the free height of the cabin corridor or cabin hall may be lower than that of the cabin or of another public space. The spacing of the cabin decks is dimensioned as small as possible according to the corridor of the cabin area.

At the assembly stage of the vessel's passenger compartments the cabin units are preferably mounted in the transverse direction of the vessel. As the cabin unit does not need to be moved essentially in the longitudinal direction of the vessel at the installation stage, the free height of the cabin unit, which is determined by the clearance for transport possibly required, the technical devices of the cabin unit arranged on the cabin roof, e.g. an air conditioner, or the covering of the ceiling, which can be essentially thicker than the cladding of the corridor ceiling for better sound insulation, may accordingly be as large as possible in the scope of the deck spacing.

Alternatively, the ceiling of the cabin unit may be mounted in place and attached to the cabin unit only after the cabin unit has been moved to its place in the deck building of the vessel. This arrangement provides better possibilities for moving the cabin units onboard, if needed, under the transverse beams before being mounted to their final positions.

Typically at least four, preferably 6 - 8, cabin decks are arranged on the vessel.

In the following the invention is described by way of example with reference to the attached drawings, in which
Figure 1 shows the cross-section of a passenger vessel according to the invention; and
Figure 2 shows as section II-II of Fig. 1 how cabin units are arranged on cabin decks between the transverse beams.

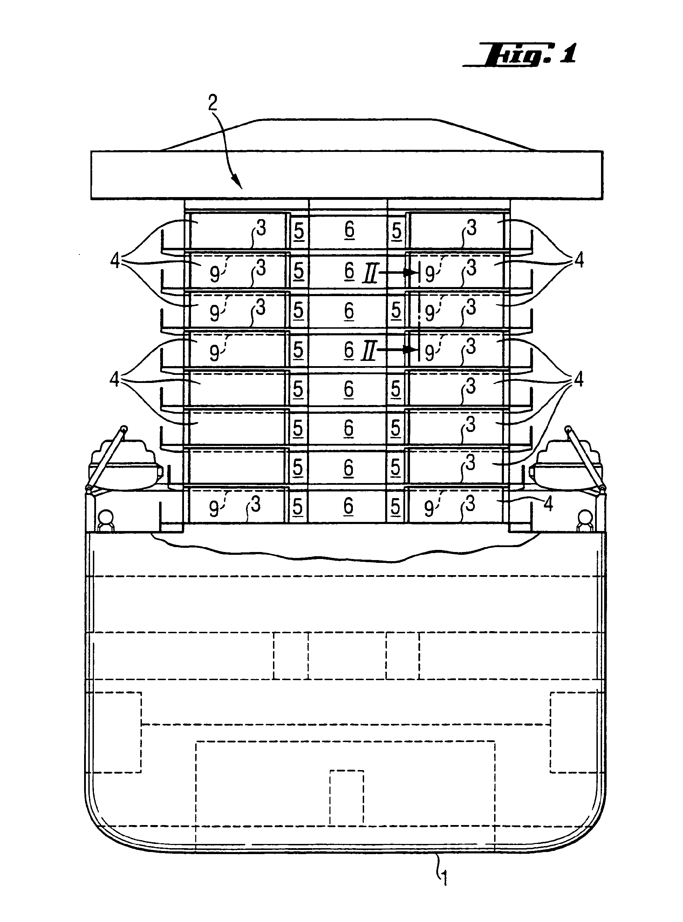

Reference numeral 1 in the drawings refers to the hull of a vessel, on top of which there is a deck building 2 comprising a number of decks 3. With reference to Fig. 1, on each deck there are two outwards-directed cabin units 4, between which cabin corridors 5 and a technical space 6 are situated. At least most of the vessel's heating, plumbing, ventilation and electrical installation systems or other similar systems (not shown in Fig. 1) are led via the technical space 6 in the longitudinal direction of the vessel.

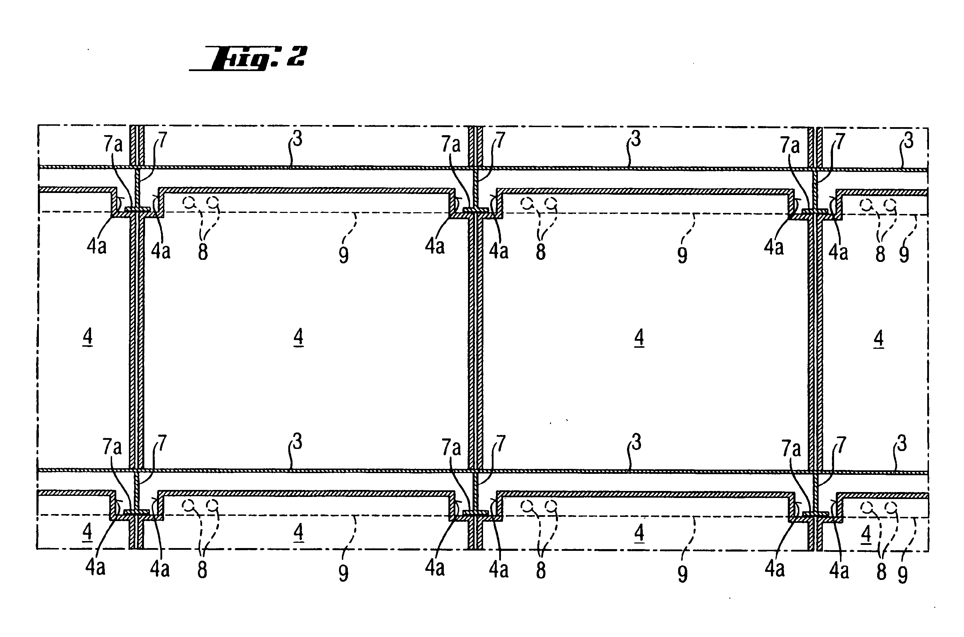

Fig. 2 shows more precisely how, according to the invention, cabin units 4 are mounted between the transverse beams 7, whereby the height of the cabin unit 4 can be considerably increased so as to clearly exceed the free height (cf. the dotted line 9) of the cabin corridor 5, which is determined by the height of the beams 7. In the arrangement according to the invention lower transverse beams 7 dimensioned on the basis of the load have been used, which beams have hardly any openings for possible lead-throughs. Thus, the vessel's connections from the heating, plumbing, ventilation and electrical installation systems or the like located in the technical space 6 are arranged deck by deck in the transverse direction of the vessel across the cabin corridor 5 over to the cabin units 4, as illustrated by the reference numeral 8. In this manner, by architectural means, the impression of the cabin being spacious can be intensified, and at the same time the arrangement makes it possible to increase the number of cabin decks 3. Since the transverse beams 7 are positioned lower than conventionally, material savings can be obtained and the costs can be reduced.

The cabin units 4 can be mounted during the construction phase, for instance by inserting them between the transverse beams 7 into their positions. In this case the cabin units may be moved onto the vessel as complete assemblies. The arrangement requires such a division of compartments that there are no transverse beams, beams or poles on the transport route, when cabin units are being mounted. Alternatively, the ceiling of the cabin unit may be mounted in place and attached to the cabin unit only after the cabin unit has been moved to its place in the deck building of the vessel. In this case the cabin units can still be moved even onboard, if needed, under the transverse beams before being mounted to their final positions.

The weight of steel in a deck will decrease, as the transverse beams and the beam become lower. The mounting of a cabin unit 4 between the deck beams 7 requires a recess 4a or a similar space arrangement in the corner of the cabin unit's wall and ceiling, into which recess the transverse flange 7a of the beam 7 is to be located. The structure as such will increase the costs of the cabin unit to some extent, but it also utilizes the surface area of the deck efficiently, as the cabins can be mounted very close to one another. On the other hand, the lower parts of the stiff walls of the cabin units 4 are supported by the deck 3, next to the beams 7 or in the vicinity of the beams, i.e. they are in such connection with the beams that they, for their part, stiffen the deck 3.

Decreased deck spacing has a direct lowering effect on the centre of gravity and at the same time the weight of steel will be decreased and the costs of the deck reduced. The use of prefabricated stiff cabin units is advantageous even in terms of transportation, whereby the stiffness requirement for a cabin unit does not in practice increase the weight of the cabin unit.

Although the deck building of the vessel in the arrangement according to Fig. 1 is clearly narrower than the actual hull of the vessel, and all the cabin units are placed on the edges of the deck building and in addition, there is only one unitary technical space shown between the cabin rows, the invention is by no means limited to this kind of arrangement. On the contrary, cabin units according to the invention may, in addition to the outboard of the vessel, be located anywhere on the vessel, for instance partially even adjacent to the technical space shown in Fig. 1, which in this case may be a wide and unitary space. Thus the air conditioning ducts and pipes for the inboard and outboard cabins are led in the technical space without any lead-throughs and there are lead-throughs provided only when being led into the cabin units. Alternatively, the inboard cabins may be located adjacent to the cabin corridor and the technical space provided in the middle section of the hull. Thus the inboard cabin units can be made low or they can be provided with a recess in the ceiling for leading the ducts and pipes to the outboard cabins. If needed, the cabin units may extend, when for instance balconies are concerned, also to some extent outside the board of the vessel. What is essential is that the cabin units are arranged in one or several sufficiently large groups in order to gain a sufficient overall impact of the invention.

The invention is not limited to the above-described embodiments, but several modifications are conceivable within the scope of the appended claims.

## Claims

1. A method of arranging cabin decks in a large passenger vessel comprising a deck building (2) to be arranged at least for the most part above the board of the actual hull (1) of the vessel, which deck building includes a number of cabin decks (3) on top of each other which are provided with movable cabin units (4) preferably as prefabricated as possible, and in which in the lateral direction of the vessel, in the middle section thereof, each cabin deck (3) is provided with a longitudinal space, which comprises at least one cabin corridor (5) and a technical space (6), where at least most of the vessel's heating, plumbing, ventilation and electrical installation and/or corresponding systems for the cabin units on the cabin deck in question are installed, **characterised in that** the cabin units (4) are arranged on both sides of said longitudinal space side by side in the longitudinal direction of the vessel according to the pitch of the decks' transverse beams (7) so that the lower parts of the walls of the cabin units (4), being parallel with the transverse beams, are attached to the deck (3) in conjunction with said transverse beams and that the upper parts of the walls of the cabin units (4) are arranged between said transverse beams and are provided with a recess (4a) or a similar space for a flange part (7a) of the transverse beams, and **in that** said systems in the technical space (6) are connected to the cabin units (4) between said transverse beams (7) by piping, ducts or cables, which are at least substantially transverse with respect to the vessel.

2. A method according to claim 1, **characterised in that** the cabin units (4) are dimensioned so that their inner height is larger than the distance between the cabin deck (3) supporting them and the flange part (7a) of the transverse beams.

3. A method according to claim 1 or 2, **characterised in that** the cabin units (4) are mounted in the transverse direction of the vessel at the compartment assembly stage of the deck building (2) of the vessel.

4. A method according to claim 1 or 2, **characterised in that** the ceilings of the cabin units (4) are mounted in place and attached to the cabin unit (4) only after the cabin units (4) are moved to their places in the deck building (2) of the vessel.

5. A method according to any one of the preceding claims, **characterised in that** at least four, preferably 6 - 8, cabin decks (3) are arranged on the vessel.

6. Cabin deck arrangement in a large passenger vessel comprising a deck building (2) to be arranged at least for the most part above the board of the actual hull (1) of the vessel, which deck building includes a number of cabin decks (3) on top of each other provided with prefabricated cabin units (4), and in which in the lateral direction of the vessel, in the middle section thereof, each cabin deck (3) is provided with a longitudinal space, which comprises at least one cabin corridor (5) and a technical space (6), where at least most of the vessel's heating, plumbing, ventilation and electrical installation and/ or corresponding systems for the cabin units on the cabin deck in question are installed, **characterised in that** the cabin units (4) are arranged on both sides of said longitudinal space side by side in the longitudinal direction of the vessel according to the pitch of the decks' transverse beams (7) so that the lower parts of the walls of the cabin units (4), being parallel with the transverse beams, are attached to the deck (3) in conjunction with said transverse beams and that the upper parts of the walls of the cabin units (4) are arranged between said transverse beams and are provided with a recess (4a) or a similar space for a flange part (7a) of the transverse beams, and **in that** said systems in the technical space (6) are connected to the cabin units (4) between said transverse beams (7) by piping, ducts or cables, which are at least substantially transverse with respect to the vessel.

7. Cabin deck arrangement according to claim 6, **characterised in that** the cabin units (4) are dimensioned so that their inner height is larger than the distance between the cabin deck (3) supporting them and the flange part (7a) of the transverse beam.

8. Cabin deck arrangement according to claim 6 or 7, **characterised in that** the free height of the cabin units (4) is at least about 100 mm larger than the free height of the cabin corridor (5).

9. Cabin deck arrangement according any one of claims 6 - 8, **characterised in that** there are at least four, preferably 6 - 8, cabin decks (3) on the vessel.

## Patentansprüche

1. Verfahren zum Anordnen von Kabinendecks in einem großen Passagierschiff mit einem Deckshaus (2), das mindestens zum größten Teil über dem Bord des eigentlichen Rumpfs (1) des Schiffs anzuordnen ist, wobei das Deckshaus mehrere übereinander angeordnete Kabinendecks (3) aufweist, die mit beweglichen Kabineneinheiten (4) versehen sind, die so weit vorgefertigt wie möglich sind, und wobei in der seitlichen Richtung des Schiffs, in seinem mittleren Abschnitt, jedes Kabinendeck (3) mit einem länglichen Raum versehen ist, der mindestens einen Kabinenkorridor (5) und einen technischen Raum (6) aufweist, in dem mindestens der größte Teil der Heizungs-, Sanitär-, Belüftungs- und elektrische Installations- und/oder entsprechenden Anlagen für die Kabineneinheiten auf dem jeweiligen Kabinendeck installiert ist, **dadurch gekennzeichnet, dass** die Kabineneinheiten (4) auf beiden Seiten des länglichen Raums nebeneinander in der Längsrichtung des Schiffs gemäß der Neigung der Querträger (7) der Decks angeordnet sind, so dass die unteren Teile der Wände der Kabineneinheiten (4), da sie parallel zu den Querträgern verlaufen, in Verbindung mit den Querträgern am Deck (3) angebracht sind und dass die oberen Teile der Wände der Kabineneinheiten (4) zwischen den Querträgern angeordnet und mit einer Ausnehmung (4a) oder einem ähnlichen Raum für ein Flanschteil (7a) der Querträger versehen sind und dass die Anlagen im technischen Raum (6) zwischen den Querträgern (7) über Rohre, Schächte oder Kabel, die mindestens im Wesentlichen quer zum Schiff verlaufen, mit den Kabineneinheiten (4) verbunden sind.

2. Verfahren nach Anspruch 1, **dadurch gekennzeichnet, dass** die Kabineneinheiten (4) so bemessen sind, dass ihre innere Höhe größer ist als der Abstand zwischen dem sie tragenden Kabinendeck (3) und dem Flanschteil (7a) der Querträger.

3. Verfahren nach Anspruch 1 oder 2, **dadurch gekennzeichnet, dass** die Kabineneinheiten (4) im Abteilmontagestadium des Deckshauses (2) des Schiffs in der Querrichtung des Schiffs montiert werden.

4. Verfahren nach Anspruch 1 oder 2, **dadurch gekennzeichnet, dass** die Decken der Kabineneinheiten (4) erst nachdem die Kabineneinheiten (4) im Deckshaus (2) des Schiffs an Ort und Stelle bewegt worden sind festmontiert und an der Kabineneinheit (4) angebracht werden.

5. Verfahren nach einem der vorhergehenden Ansprüche, **dadurch gekennzeichnet, dass** mindestens vier, vorzugsweise 6 - 8, Kabinendecks (3) auf dem Schiff angeordnet werden.

6. Kabinendeckanordnung in einem großen Passagierschiff mit einem Deckshaus (2), das mindestens zum größten Teil über dem Bord des eigentlichen Rumpfs (1) des Schiffs anzuordnen ist, wobei das Deckshaus mehrere übereinander angeordnete Kabinendecks (3) aufweist, die mit vorgefertigten Kabineneinheiten (4) versehen sind, und wobei in der seitlichen Richtung des Schiffs, in seinem mittleren Abschnitt, jedes Kabinendeck (3) mit einem länglichen Raum versehen ist, der mindestens einen Kabinenkorridor (5) und einen technischen Raum (6) aufweist, in dem mindestens der größte Teil der Heizungs-, Sanitär-, Belüftungs- und elektrische Installations- und/oder entsprechenden Anlagen für die Kabineneinheiten auf dem jeweiligen Kabinendeck installiert ist, **dadurch gekennzeichnet, dass** die Kabineneinheiten (4) auf beiden Seiten des länglichen Raums nebeneinander in der Längsrichtung des Schiffs gemäß der Neigung der Querträger (7) der Decks angeordnet sind, so dass die unteren Teile der Wände der Kabineneinheiten (4), da sie parallel zu den Querträgern verlaufen, in Verbindung mit den Querträgern am Deck (3) angebracht sind und dass die oberen Teile der Wände der Kabineneinheiten (4) zwischen den Querträgern angeordnet und mit einer Ausnehmung (4a) oder einem ähnlichen Raum für ein Flanschteil (7a) der Querträger versehen sind und dass die Anlagen im technischen Raum (6) zwischen den Querträgern (7) über Rohre, Schächte oder Kabel, die mindestens im Wesentlichen quer zum Schiff verlaufen, mit den Kabineneinheiten (4) verbunden sind.

7. Kabinendeckanordnung nach Anspruch 6, **dadurch gekennzeichnet, dass** die Kabineneinheiten (4) so bemessen sind, dass ihre innere Höhe größer ist als der Abstand zwischen dem sie tragenden Kabinendeck (3) und dem Flanschteil (7a) des Querträgers.

8. Kabinendeckanordnung nach Anspruch 6 oder 7, **dadurch gekennzeichnet, dass** die freie Höhe der Kabineneinheiten (4) mindestens etwa 100 mm größer als die freie Höhe des Kabinenkorridors (5) ist.

9. Kabinendeckanordnung nach einem der Ansprüche 6 - 8, **dadurch gekennzeichnet, dass** mindestens vier, vorzugsweise 6 - 8, Kabinendecks (3) auf dem Schiff angeordnet sind.

## Revendications

1. Procédé pour agencer les ponts-cabines sur un grand navire à passagers comportant une superstructure de ponts (2) destinée à être agencée au moins pour sa plus grande partie au-dessus du bordé de la coque (1) proprement dite du navire, laquelle superstructure de ponts comprend un certain nombre de ponts-cabines (3) superposés pourvus d'unités de cabines (4) mobiles, de préférence aussi préfabriquées que possible, et où, dans la direction latérale du navire, dans la section médiane de celui-ci, chaque pont-cabines (3) est pourvu d'un compartiment longitudinal qui comporte au moins une coursive de cabines (5) et un compartiment technique (6) où sont installés au moins la plupart des systèmes de chauffage, de plomberie, de ventilation et d'installation électrique du navire et/ou les systèmes correspondants pour les unités de cabines situées sur le pont-cabines en question, **caractérisé en ce que** les unités de cabines (4) sont agencées des deux côtés dudit compartiment longitudinal, côte à côte dans la direction longitudinale du navire selon l'espacement des poutres transversales (7) des ponts de telle sorte que les parties inférieures des parois des unités de cabines (4), étant parallèles aux poutres transversales, soient fixées au pont (3) en conjonction avec lesdites poutres transversales et que les parties supérieures des parois des unités de cabines (4) soient agencées entre lesdites poutres transversales et soient pourvues d'un renfoncement (4a) ou d'un espace similaire pour une partie d'aile (7a) des poutres transversales, et **en ce que** lesdits systèmes situés dans le compartiment technique (6) sont reliés aux unités de cabines (4) entre lesdites poutres transversales (7) par des canalisations, des conduits ou des câbles au moins sensiblement transversaux par rapport au navire.

2. Procédé selon la revendication 1, **caractérisé en ce que** les unités de cabines (4) sont dimensionnées de telle sorte que leur hauteur intérieure soit supérieure à la distance entre le pont-cabines (3) les supportant et la partie d'aile (7a) des poutres transversales.

3. Procédé selon la revendication 1 ou 2, **caractérisé en ce que** les unités de cabines (4) sont montées dans la direction transversale du navire lors de la phase d'assemblage des tranches de la superstructure de ponts (2) du navire.

4. Procédé selon la revendication 1 ou 2, **caractérisé en ce que** les plafonds des unités de cabines (4) sont montés en place et fixés à l'unité de cabine (4) seulement après que les unités de cabines (4) ont été amenées jusqu'à leurs emplacements dans la superstructure de ponts (2) du navire.

5. Procédé selon l'une quelconque des revendications précédentes, **caractérisé en ce qu'**au moins quatre, et de préférence 6 à 8, ponts-cabines (3) sont agencés sur le navire.

6. Agencement de ponts-cabines sur un grand navire à passagers comportant une superstructure de ponts (2) destinée à être agencée au moins pour sa plus grande partie au-dessus du bordé de la coque (1) proprement dite du navire, laquelle superstructure de ponts comprend un certain nombre de ponts-cabines (3) superposés pourvus d'unités de cabines (4) préfabriquées, et où, dans la direction latérale du navire, dans la section médiane de celui-ci, chaque pont-cabines (3) est pourvu d'un compartiment longitudinal qui comporte au moins une coursive de cabines (5) et un compartiment technique (6) où sont installés au moins la plupart des systèmes de chauffage, de plomberie, de ventilation et d'installation électrique du navire et/ou les systèmes correspondants pour les unités de cabines situées sur le pont-cabines en question, **caractérisé en ce que** les unités de cabines (4) sont agencées des deux côtés dudit compartiment longitudinal, côte à côte dans la direction longitudinale du navire selon l'espacement des poutres transversales (7) des ponts de telle sorte que les parties inférieures des parois des unités de cabines (4), étant parallèles aux poutres transversales, soient fixées au pont (3) en conjonction avec lesdites poutres transversales et que les parties supérieures des parois des unités de cabines (4) soient agencées entre lesdites poutres transversales et soient pourvues d'un renfoncement (4a) ou d'un espace similaire pour une partie d'aile (7a) des poutres transversales, et **en ce que** lesdits systèmes situés dans le compartiment technique (6) sont reliés aux unités de cabines (4) entre lesdites poutres transversales (7) par des canalisations, des conduits ou des câbles au moins sensiblement transversaux par rapport au navire.

7. Agencement de ponts-cabines selon la revendication 6, **caractérisé en ce que** les unités de cabines (4) sont dimensionnées de telle sorte que leur hauteur intérieure soit supérieure à la distance entre le pont-cabines (3) les supportant et la partie d'aile (7a) de la poutre transversale.

8. Agencement de ponts-cabines selon la revendication 6 ou 7, **caractérisé en ce que** la hauteur libre des unités de cabines (4) est supérieure d'au moins 100 mm environ à la hauteur libre de la coursive de cabines (5).

9. Agencement de ponts-cabines selon l'une quelconque des revendications 6 à 8, **caractérisé en ce qu'**il existe au moins quatre, et de préférence 6 à 8, ponts-cabines (3) sur le navire.
